(19) Europäisches Patentamt
European Patent Office
Office européen des brevets

(11) Veröffentlichungsnummer : **0 384 263 B1**

(12) # EUROPÄISCHE PATENTSCHRIFT

(45) Veröffentlichungstag der Patentschrift :
**11.11.92 Patentblatt 92/46**

(51) Int. Cl.$^5$ : **C08F 210/06,** C08F 4/642

(21) Anmeldenummer : **90102761.5**

(22) Anmeldetag : **13.02.90**

(54) **Verfahren zur Herstellung eines statistischen Propylen-Copolymers.**

(30) Priorität : **15.02.89 DE 3904469**

(43) Veröffentlichungstag der Anmeldung :
**29.08.90 Patentblatt 90/35**

(45) Bekanntmachung des Hinweises auf die Patenterteilung :
**11.11.92 Patentblatt 92/46**

(84) Benannte Vertragsstaaten :
**BE DE ES FR GB IT NL**

(56) Entgegenhaltungen :
**EP-A- 0 284 707**

(73) Patentinhaber : **HOECHST AKTIENGESELLSCHAFT**
**Postfach 80 03 20**
**W-6230 Frankfurt am Main 80 (DE)**

(72) Erfinder : **Dolle, Volker, Dr.**
**Hattersheimer Strasse 15**
**W-6233 Kelkheim (Taunus) (DE)**
Erfinder : **Antberg, Martin, Dr.**
**Sachsenring 10**
**W-6238 Hofheim am Taunus (DE)**
Erfinder : **Rohrmann, Jürgen, Dr.**
**Die Ritterwiesen 10**
**W-6237 Liederbach (DE)**
Erfinder : **Winter, Andreas, Dr.**
**Gundelhardtstrasse 2**
**W-6233 Kelkheim (Taunus) (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Bei der Polymerisation von Olefinen werden je nach Verfahrensweise Copolymere mit unterschiedlichen Eigenschaften und unterschiedlichen Gehalten an Comonomeren erhalten:

a) statistische Copolymere mit einem geringen Gehalt an Comonomeren,

b) Polymerblends, die einen höheren Einbau an Comonomeren als die statistischen Copolymeren enthalten, und

c) Copolymer-Kautschuke, die die Comonomeren in vergleichbarem Maß eingebaut enthalten.

Statistische Copolymere unterscheiden sich von den entsprechenden Homopolymeren in der Regel durch eine geringere Kristallinität und eine geringere Härte. Gefordert wird für die statistischen Copolymere ein möglichst statistischer Kettenaufbau. Die in der Technik bekannten Olefin-Copolymeren, die mit Hilfe heterogener Katalysatoren hergestellt werden, können diese Forderung nur sehr begrenzt erfüllen.

Es sind statistische Terpolymere aus $C_2/C_3/C_n$ mit n > 3 beschrieben worden, welche mittels heterogener Katalysatoren erhalten wurden (vgl. EP 263718). Der $C_3$-Gehalt beträgt 97 bis 86 Mol-%, der $C_2$-Gehalt 0,5 bis 6 % und der $C_n$-Gehalt (n > 3) 2 bis 13 Mol %. Das Material besitzt gute Heißsiegeleigenschaften, wird aber in einem zweistufigen Verfahren mit einem Suspensions- und einem Gasphasenpolymerisationsschritt erhalten. Um die gewünschten Anti-Blocking-Eigenschaften zu erlangen, muß ein Terpolymer mit einem hohen Anteil an Fremdmonomer hergestellt werden. Erwünscht sind jedoch Bipolymere, da diese einfacher zu handhaben sind und einen chemisch einheitlichen Kettenaufbau aufweisen.

Weiterhin sind statistische $C_2/C_3$-Copolymere bekannt, die im Suspensionsverfahren hergestellt werden (vgl. EP 74194). Um das gewünschte Eigenschaftsbild zu erhalten, müssen die erhaltenen Polymeren abgebaut werden. Außerdem liegt der Ethylen-Gehalt oberhalb 6 %. Dieser hohe $C_2$-Anteil wird benötigt, um die chemische Uneinheitlichkeit eines heterogenen Katalysator-Systems, die zu einem höheren Anteil an kristallisierfähigen Sequenzen im Polymeren führt, zu mildern.

Schließlich ist ein Ethylen-Propylen-Copolymer mit hohem Ethylengehalt und ein Verfahren zu seiner Herstellung beschrieben worden (vgl. JP 62-121707). Das Verfahren wird unter Verwendung von Ethylen-bisindenyl-zirkondichlorid bei einer Temperatur von weniger als -10°C durchgeführt und kommt somit für die industrielle Fertigung nicht in Frage. Außerdem ist die Aktivität des Katalysators sehr gering.

Es bestand somit die Aufgabe, ein Verfahren zur Herstellung eines Propylen-Copolymers zu finden, welches in einem technisch interessanten Temperaturbereich mit ausreichender Katalysatoraktivität durchführbar ist und ein Copolymer liefert, welches sich für das Tiefziehen und Blasformen eignet.

Es wurde gefunden, daß die Aufgabe durch Copolymerisation von Propylen mit anderen Olefinen in Gegenwart bestimmter Metallocen-Katalysatoren gelöst werden kann.

Die Erfindung betrifft somit ein Verfahren zur Herstellung eines Propylen-Copolymers, bestehend aus 99,9 bis 80,0 mol-%, bezogen auf das Gesamtpolymer, Propyleneinheiten und 0,1 bis 20,0 mol-%, bezogen auf das Gesamtpolymer, aus Einheiten, die sich von Ethylen oder einem Olefin mit mindestens 4 C-Atomen der Formel $R^{15}$-CH=CH-$R^{16}$ ableiten, worin $R^{15}$ und $R^{16}$ gleich oder verschieden sind und ein Wasserstoffatom oder einen Alkylrest mit 1 bis 28 C-Atomen bedeuten oder $R^{15}$ und $R^{16}$ mit den sie verbindenden C-Atomen einen Ring mit 4 bis 28 C-Atomen bilden, durch Polymerisation von 50 bis 99,5 Gew.-%, bezogen auf die Gesamtmenge der Monomeren, Propylen und 0,5 bis 50 Gew.-%, bezogen auf die Gesamtmenge der Monomeren, mindestens eines Vertreters der Gruppe Ethylen und Olefine mit mindestens 4 C-Atomen der Formel $R^{15}$-CH=CH-$R^{16}$, worin $R^{15}$ und $R^{16}$ die oben genannte Bedeutung haben, bei einer Temperatur von 30°C bis 150°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Metallocen eine Verbindung der Formel I

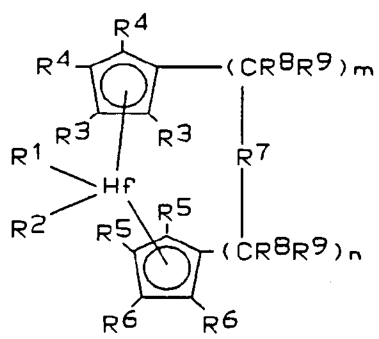

(I).

ist, worin

$R^1$ und $R^2$ gleich oder verschieden sind und ein Wasserstoffatom, eine $C_1$-$C_{10}$-Alkylguppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$,$R^4$, $R^5$ und $R^6$ gleich oder verschieden sind und ein Wasserstoffatom, ein Halogenatom, eine $C_1$-$C_{10}$-Alkylgruppe,

einen -$NR_2^{10}$-,-$SR^{10}$-, -$OSiR_3^{10}$-, -$SiR_3^{10}$- oder -$PR_2^{10}$- Rest bedeuten,

worin $R^{10}$ eine $C_1$-$C_{10}$-Alkylgruppe, eine $C_6$-$C_{10}$-Arylgruppe oder im Falle Si oder P enthaltender Reste auch ein Halogenatom ist,

oder je zwei benachbarte Reste $R^3$, $R^4$, $R^5$ oder $R^6$ mit den sie verbindenden C-Atomen einen Ring bilden,

$R^7$

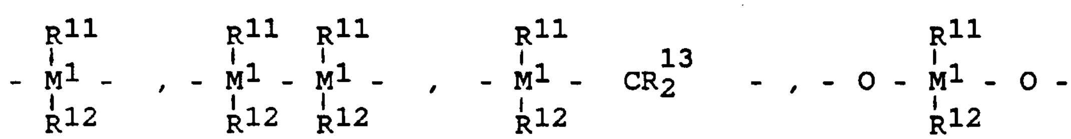

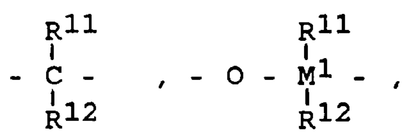

=$BR^{11}$, =$AlR^{11}$, -Ge-, -Sn-, -O-, -S-, =SO, =$SO_2$, =$NR^{11}$, =CO, =$PR^{11}$ oder =P(O)$R^{11}$ ist,

wobei

$R^{11}$, $R^{12}$ und $R^{13}$ gleich oder verschieden sind und ein Wasserstoffatom, ein Halogenatom, eine $C_1$-$C_{30}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^1$ Silizium, Germanium oder Zinn ist,

$R^8$ und $R^9$ gleich oder verschieden sind und die für $R^{11}$ genannte Bedeutung haben,

m und n gleich oder verschieden sind und null, 1 oder 2 sind, wobei m plus n null, 1 oder 2 ist,

und einem Aluminoxan der Formel (II)

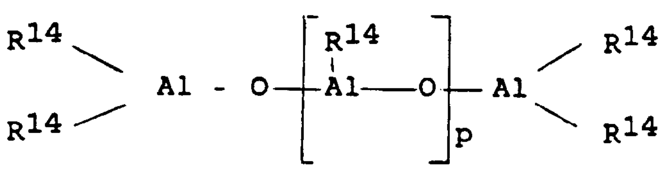

(II)

für den linearen Typ und/oder der Formel (III)

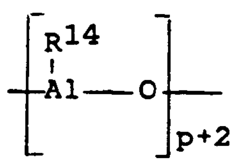

(III)

für den cyclischen Typ, wobei in den Formeln (II) und (III) $R^{14}$ eine $C_1$-$C_6$-Alkylgruppe bedeutet und p eine ganze Zahl von 2 bis 50 ist, bedeutet.

Die Erfindung betrifft weiterhin das nach dem vorstehenden Verfahren hergestellte Copolymer und seine

Verwendung für die Herstellung von Tiefziehfolien und für das Blasformen von Hohlkörpern.

Der für das erfindungsgemäße Verfahren zu verwendende Katalysator besteht aus einem Aluminoxan und einem Metallocen der Formel I.

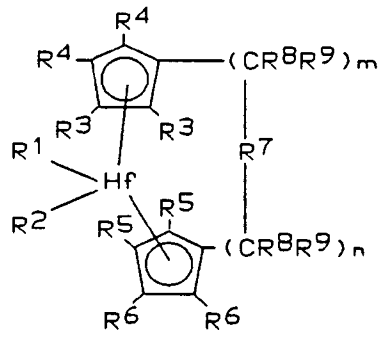

(I).

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$, $R^4$, $R^5$ und $R^6$ sind gleich oder verschieden und bedeuten ein Wasserstoffatom, ein Halogenatom, vorzugsweise ein Fluor-, Chlor- oder Bromatom, eine $C_1$-$C_{10}$- vorzugsweise $C_1$-$C_3$-Alkylgruppe, einen $-NR^{10}_2$-, $-SR^{10}$-, $-OSiR^{10}_3$-, $-SiR^{10}_3$-oder $PR^{10}_2$-Rest bedeuten, worin $R^{10}$ eine $C_1$-$C_{10}$, vorzugsweise $C_1$-$C_3$-Alkylgruppe oder $C_6$-$C_{10}$-, vorzugsweise $C_6$-$C_8$-Arylgruppe, oder im Falle Si oder P enthaltender Reste auch ein Halogenatom, vorzugsweise Chloratom, ist, oder je zwei benachbarte Reste $R^3$, $R^4$, $R^5$ oder $R^6$ bilden mit den sie verbindenden C-Atomen einen Ring. Besonders bevorzugte Liganden sind Indenyl, Fluorenyl und Cyclopentadienyl.

$R^7$ ist

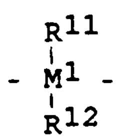 , 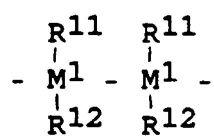 , 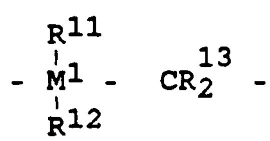 , 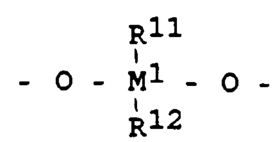

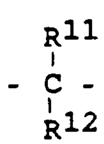 , 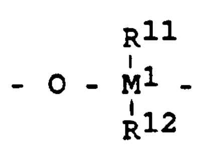 ,

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$, wobei $R^{11}$, $R^{12}$ und $R^{13}$ gleich oder verschieden sind und ein Wasserstoffatom, ein Halogenatom, eine $C_1$-$C_{30}$, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenyl-gruppe, eine $C_6$-$C_{19}$-, vorzugsweise $C_6$-$C_8$-Arylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^1$ ist Silizium, Germanium oder Zinn, bevorzugt Silizium und Germanium.

$R^7$ ist vorzugsweise $=CR^{11}R^{12}$, $=SiR^{11}R^{12}$, $=GeR^{11}R^{12}$, -O-, -S-, =SO, $=PR^{11}$ oder $=P(O)R^{11}$.

$R^8$ und $R^9$ sind gleich oder verschieden und haben die für $R^{11}$ genannte Bedeutung.

m und n sind gleich oder verschieden und bedeuten null, 1 oder 2, bevorzugt null oder 1, wobei m plus n null, 1 oder 2, bevorzugt null oder 1 ist.

Die vorstehend beschriebenen Metallocene können nach folgendem allgemeinen Reaktionsschema hergestellt werden:

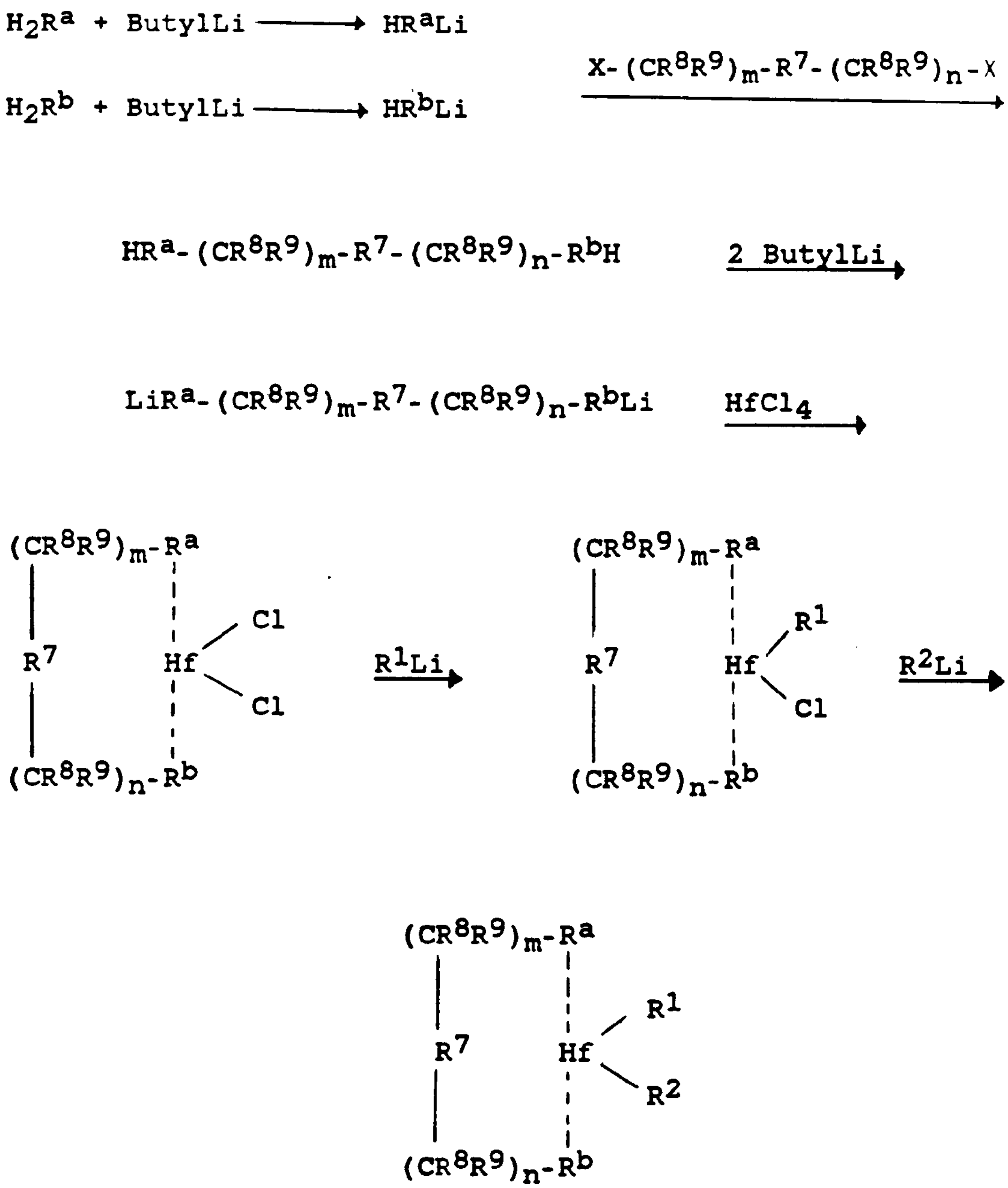


(X = Cl, Br, J, O-Tosyl, $HR^a$ =

$HR^a$ = 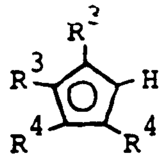 ,

$HR^b$ = 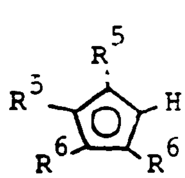 ).

Bevorzugte Metallocene sind solche der Formel I, worin der Rest - $(CR^8R^9)_m$-$R^7$-$(CR^8R^9)_n$- -$CH_2$-$CH_2$-, -$Ge(CH_3)_2$-, -$Si(CH_3)_2$-, -$Si(C_6H_5)_2$- oder -$Si(CH_3)(C_6H_5)$- bedeutet.

Die besonders bevorzugt eingesetzten Metallocenverbindungen sind Ethylen-bisindenyl-hafniumdichlorid (= 1) und Bisindenyl-dimethylsilylhafniumdichlorid (= 2).

Der Cokatalysator ist ein Aluminoxan der Formel II

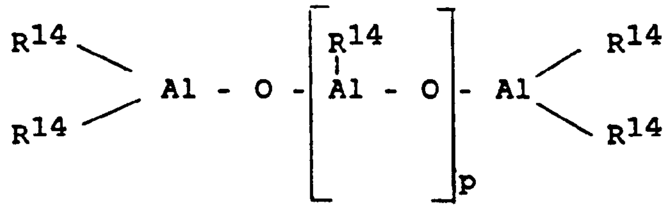

(II)

für den linearen Typ und/oder der Formel (III)

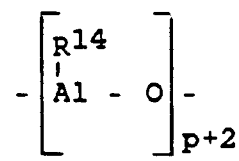

(III)

für den cyclischen Typ. In diesen Formeln bedeuten $R^{14}$ eine $C_1$-$C_6$-Alkylgruppe, vorzugsweise Methyl, Ethyl oder Isobutyl, insbesondere Methyl, und p eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung im Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 -vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam.

Es ist möglich, das Metallocen vor dem Einsatz in der Polymerisationsreaktion mit einem Aluminoxan der

Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.
Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Die Polymerisation wird in bekannter Weise in Lösung, in Suspension oder in der Gasphase, kontinuierlich oder diskontinuierlich, ein- oder mehrstufig bei einer Temperatur von 30 bis 150 °C, vorzugsweise 30 bis 80 °C, durchgeführt. Polymerisiert werden Propylen und als Comonomer mindestens ein Vertreter der Gruppe, die aus Ethylen und Olefinen mit mindestens 4 C-Atomen der Formel $R^{15}$-CH=CH-$R^{16}$ besteht. In dieser Formel sind $R^{15}$ und $R^{16}$ gleich oder verschieden und bedeuten ein Wasserstoffatom oder einen Alkylrest mit 1 bis 28 C-Atomen. $R^{15}$ und $R^{16}$ können jedoch auch mit den sie verbindenden C-Atomen einen Ring mit 4 bis 28 C-Atomen bilden. Beispiele für solche Olefine sind 1-Buten, 1-Hexen, 4-Methyl-1-penten, 1-Octen, Norbornen, Norbornadien, Cyclopenten, Cyclohexen oder Cycloocten. Eingesetzt werden 50 bis 99,5 vorzugsweise 60 bis 99 Gew.-%, bezogen auf die Gesamtmenge der Monomeren, Propylen und 0,5 bis 50, vorzugsweise 1 bis 40 Gew.-% bezogen auf die Gesamtmenge der Monomeren, von mindestens einem Comonomer.

Als Molmassenregler wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.
Werden inerte Lösemittel verwendet, werden die Monomeren gasförmig oder flüssig zudosiert.
Wird nur ein Monomer als Suspensionsmittel verwendet, so wird das Comonomere, beziehungsweise werden die Comonomeren gasförmig oder flüssig zudosiert.
Des weiteren ist es möglich, in einer Mischung verschiedener Monomeren als Suspensionsmittel zu polymerisieren; ein weiteres Monomeres kann dann flüssig oder gasförmig zudosiert werden. Je Verwendung von Ethylen ist es vorteilhaft, ein Teil des Ethylens vorzulegen und den Rest während der Polymerisation zuzudosieren.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die verwendeten Hafnium-Verbindungen sehr temperaturstabil sind, so daß sie mit hoher Aktivität auch bei Temperaturen bis 90°C eingesetzt werden können. Außerdem können die als Cokatalysatoren dienenden Aluminoxane in geringeren Konzentrationen als bisher zugesetzt werden. Schließlich ist es nunmehr möglich, statistische Copolymere bei technisch interessanten Temperaturen herzustellen.

Das erfindungsgemäß hergestellte Copolymer (bzw. Terpolymer) ist ein Copolymer (Terpolymer), bestehend aus 99,9 bis 80,0 mol-%, bezogen auf das Gesamtpolymer, Propyleneinheiten, und 0,1 bis 20,0 mol-%, bezogen auf das Gesamtpolymer, aus Einheiten, die sich von den obengenannten Comonomeren ableiten, bei dem die Comonomeren in Blöcken der mittleren Sequenzlänge $n < 1,25$ eingebaut sind. Die Copolymeren weisen eine einheitliche Zusammensetzung auf, d. h. es wird keine Zusammensetzungsverteilung gefunden. Die Polydispersität $M_w/M_n$ liegt im Bereich von 2,5 bis 5,5 und die $M_w$ liegt im Bereich von 100 000 bis 360 000 g/mol. Aufgrund dieser molekularen Eigenschaften weisen die Copolymeren neben einer geringen Kristallinität eine hohe Transparenz auf, sind nicht klebrig und besitzen eine enorme Zugfestigkeit.

Die Sequenzlängen der Comonomerblöcke in den erfindungsgemäßen Copolymeren sind bevorzugt kleiner 1,25, besonders bevorzugt kleiner 1,2 und insbesondere kleiner als 1,1.

Die nachfolgenden Beispiele sollen die Erfindung näher erläutern.

Es bedeuten

| | | |
|---|---|---|
| VZ = Viskositätszahl in $cm^3/g$ | | |
| $M_w$ = Molmassengewichtsmittel | } | ermittelt durch |
| $M_n$ = Molmassenzahlenmittel | } | Gelpermeationschromatographie |
| $M_w/M_n$ = Polydispersität | } | (Zahlenangaben in g/mol) |

mittlere Blocklänge

$n_{C2}$ = Polyethylen

(die Blocklängen wurden mittels $^{13}C$-NMR-Spektroskopie bestimmt)

**Beispiel 1**

Ein trockener 16 $dm^3$-Kessel wurde mit Stickstoff gespült und mit 10 $dm^3$ flüssigem Propylen befüllt. Dann wurden 35 $cm^3$ toluolische Methylaluminoxan-Lösung (= MAO, entsprechend 50,7 mmol Al, mittlerer Oligomerisierungsgrad n = 30) zugegeben und der Ansatz bei 30°C 15 Minuten gerührt. Anschließend wurden 12 g Ethylen zugegeben.

Parallel dazu wurden 52,2 mg (= 0,103 mmol) Bisindenyl-ethylen-hafnium-dichlorid in 16 $cm^3$ MAO (= 23,2 mmol Al) gelöst und durch 15-minütiges Stehenlassen voraktiviert.

Die Lösung wurde sodann in den Kessel gegeben. Das Polymerisationssystem wurde auf eine Temperatur von 60°C gebracht und die Polymerisation startete. Während der darauffolgenden 120 Minuten wurden 38 g Ethylen in kleinen Teilmengen zugegeben und die Temperatur beibehalten.

Es wurden 1,33 kg statistisches Ethylen-Propylen-Copolymeres erhalten. Die Aktivität betrug somit 12,7 kg PP/g Metallocen/h oder 6,5 kg PP/mmol Hf/h.

Am Polymeren wurden die folgenden analytischen Daten ermittelt:

VZ = 168 $cm^3$/g, $M_w$ = 196000 g/mol, $M_n$ = 44550 g/mol, $M_w/M_n$ = 4,4, $n_{C2}$ = 1,0, 3,5 Gew.-% Ethyleneinbau, $T_m$ = 126,5°C, $\Delta H_m$ = 65 J/g.

**Beispiel 2**

Es wurde analog Beispiel 1 verfahren. 23 g Ethylen wurden vorgelegt. Während der Polymerisation wurden 68 g Ethylen zudosiert.

Die Polymerisationszeit betrug ebenfalls 2 Stunden. Es wurden 40,0 mg (0,078 mmol) Metallocenverbindung eingesetzt. 1,42 kg statistisches Ethylen-Propylen-Copolymeres wurden erhalten. Die Aktivität des Metallocens betrug somit 17,8 kg PP/g Metallocen /h oder 9,0 kg PP/mmol Hf/h.

VZ = 182 $cm^3$/g, $M_w$ = 207000 g/mol, $M_n$ = 46000 g/mol, $M_w/M_n$ = 4,5, $n_{C2}$ = 1,0, 6,4 Gew.-% Ethyleneinbau, $T_m$ = 127°C, $\Delta H_m$ = 67 J/g.

**Beispiel 3**

Es wurde analog Beispiel 1 verfahren. 1,5 g Ethylen wurden vorgelegt. Während der Polymerisation wurden 4,5 g Ethylen zudosiert.

Die Polymerisationszeit betrug ebenfalls 2 Stunden. Es wurden 49,0 mg (0,096 mmol) Metallocenverbindung eingesetzt. 2,43 kg statistisches Ethylen-Propylen-Copolymeres wurden erhalten. Die Aktivität des Metallocens betrug somit 22,8 kg PP/g Metallocen /h oder 11,6 kg PP/mmol Hf/h.

VZ = 137 $cm^3$/g, $M_w$ = 151000 g/mol, $M_n$ = 30200 g/mol, $M_w/M_n$ = 5,0, $n_{C2}$ = 1,0, 2,4 % Ethyleneinbau, $T_m$ = 126°C, $\Delta H_m$ = 69 J/g.

**Beispiel 4**

Es wurde analog Beispiel 1 verfahren. Es wurden jedoch 13,5 g Ethylen vorgelegt. Während der Polymerisation wurden 40 g Ethylen zudosiert.

Die Polymerisationszeit betrug ebenfalls 2 Stunden. Es wurden 53,4 mg (0,105 mmol) Metallocenverbindung eingesetzt. 2,53 kg statistisches Ethylen-Propylen-Copolymeres wurden erhalten. Die Aktivität des Metallocens betrug somit 23,7 kg PP/g Metallocen /h oder 12,0 kg PP/mmol Hf/h.

VZ = 154 $cm^3/g$, $M_w$ = 168000 g/mol, $M_n$ = 30500 g/mol, $M_w/M_n$ = 5,8, $n_{C2}$ = 1,0, 2,1 Gew.-% Ethyleneinbau, $T_m$ = 126,8°C, $\Delta H_m$ = 70 J/g.

**Beispiel 5**

Verfahren wurde analog Beispiel 1. Es wurden jedoch 30,5 g Ethylen vorgelegt. Während der Polymerisation wurden 92 g Ethylen zudosiert.

Die Polymerisationszeit betrug ebenfalls 2 Stunden. Es wurden 56,5 mg (0,111 mmol) Metallocenverbindung eingesetzt. 1,45 kg statistisches Ethylen-Propylen-Copolymeres wurden erhalten. Die Aktivität des Metallocens betrug somit 15,5 kg PP/g Metallocen /h oder 7,9 kg PP/mmol Hf/h.

VZ = 190 $cm^3/g$, $M_w$ = 217000 g/mol, $M_n$ = 41750 g/mol, $M_w/M_n$ = 5,2, $n_{C2}$ = 1,0, 8,4 % Ethyleneinbau, $T_m$ = 127°C, $\Delta H_m$ = 61 J/g.

**Beispiel 6**

Es wurde analog Beispiel 1 verfahren. 13 g Ethylen wurden vorgelegt und zusätzlich 120 g 1-Buten. Während der Polymerisation wurden 40 g Ethylen zudosiert.

Die Polymerisationszeit betrug ebenfalls 2 Stunden. Es wurden 64,5 mg (0,127 mmol) Metallocenverbindung eingesetzt. 2,05 kg statistisches Ethylen-Propylen-Buten-Terpolymeres wurden erhalten. Die Aktivität des Metallocens betrug somit 15,9 kg PP/g Metallocen /h oder 8,1 kg PP/mmol Hf/h.

VZ = 160 $cm^3/g$, $M_w$ = 179000 g/mol, $M_n$ = 40000 g/mol, $M_w/M_n$ = 4,5, $n_{C2}$ = 1,0, 2,6 % Ethyleneinbau, $T_m$ = 126,5°C, $\Delta H_m$ = 65 J/g.

**Beispiel 7**

Verfahren wurde analog Beispiel 1. 35 g Ethylen wurden vorgelegt und zusätzlich 70 g 1-Buten. Während der Polymerisation wurden 105 g Ethylen zudosiert.

Die Polymerisationszeit betrug ebenfalls 2 Stunden. Es wurden 64,5 mg (0,127 mmol) Metallocenverbindung eingesetzt. 2,70 kg statistisches Ethylen-Propylen-Buten-Terpolymeres wurden erhalten. Die Aktivität des Metallocens betrug somit 21,0 kg PP/g Metallocen /h oder 10,6 kg PP/mmol Hf/h.

VZ = 130 $cm^3/g$, $M_w$ = 142000 g/mol, $M_n$ = 26320 g/mol, $M_w/M_n$ = 5,4, $n_{C2}$ = 1,0, 5,2 % Ethyleneinbau, $T_m$ = 126°C, $\Delta H_m$ = 67 J/g.

**Beispiel 8**

Es wurde analog Beispiel 1 verfahren, aber als Polymerisationstemperatur wurde 50°C gewählt. 30 g Ethylen wurden vorgelegt. Während der Polymerisation wurden 95 g Ethylen zudosiert.

Die Polymerisationszeit betrug ebenfalls 2 Stunden. Es wurden 55,7 mg (0,110 mmol) Metallocenverbindung eingesetzt. 2,15 kg statistisches Ethylen-Propylen-Copolymeres wurden erhalten. Die Aktivität des Metallocens betrug somit 19,3 kg PP/g Metallocen /h oder 9,8 kg PP/mmol Hf/h.

VZ = 134 $cm^3/g$, $M_w$ = 115000 g/mol, Mn = 20900 g/mol, $M_w/M_n$ = 5,5, $n_{C2}$ = 1,0, 5,7 % Ethyleneinbau, $T_m$ = 127°C, $\Delta H_m$ = 69 J/g.

**Beispiel 9**

Verfahren wurde analog Beispiel 1, aber als Polymerisationstemperatur wurde 70°C gewählt. 11 g Ethylen wurden vorgelegt. Während der Polymerisation wurden 35 g Ethylen zudosiert.

Die Polymerisationszeit betrug ebenfalls 2 Stunden. Es wurden 45,5 mg (0,089 mmol) Metallocenverbindung eingesetzt. 1,74 kg statistisches Ethylen-Propylen-Copolymeres wurden erhalten. Die Aktivität des Metallocens betrug somit 19,1 kg PP/g Metallocen /h oder 9,7 kg PP/mmol Hf/h.

VZ = 158 $cm^3/g$, $M_w$ = 158000 g/mol, $M_n$ = 32400 g/mol, $M_w/M_n$ = 4,9, $n_{C2}$ = 1,0, 2,6 Gew.-% Ethyleneinbau, $T_m$ = 128°C, $\Delta H_m$ = 68,5 J/g.

**Beispiel 10**

Es wurde analog Beispiel 1 verfahren. Als Katalysator wurde jedoch Hafniumbisindenyldimethylsilyldichlorid verwandt. 10 g Ethylen wurden vorgelegt. Während der Polymerisation wurden 35 g Ethylen zudosiert. Es wurde zwei Stunden bei 60°C polymerisiert. Es wurden 53 mg (0,099 mmol) Metallocenverbindung eingesetzt. 0,88 kg statistisches Ethylen-Propylen-Copolymeres wurden erhalten. Die Aktivität des Metallocens betrug somit 8,3 kg PP/g Metallocen /h oder 4,4 kg PP/mmol Hf/h.

VZ = 285 $cm^3/g$, $M_w$ = 336000 g/mol, $M_n$ = 65900 g/mol, $M_w/M_n$ = 5,1, $n_{C2}$ = 1,0, 4,9 % Ethyleneinbau, $T_m$ = 127,5°C, $\Delta H_m$ = 62 J/g.

**Beispiel 11**

Verfahren wurde analog Beispiel 10. 1 g Ethylen wurde vorgelegt. Während der Polymerisation wurden 5 g Ethylen zudosiert. Es wurde zwei Stunden bei 60°C polymerisiert. 47,2 mg (0,088 mmol) Metallocenverbindung wurden eingesetzt. 2,4 kg statistisches Ethylen-Propylen-Copolymeres wurden erhalten. Die Aktivität des Metallocens betrug somit 25,4 kg PP/g Metallocen /h oder 13,6 kg PP/mmol Hf/h.

VZ = 272 $cm^3/g$, $M_w$ = 310000 g/mol, $M_n$ = 68000 g/mol, $M_w/M_n$ = 4,7, $n_{C2}$ = 1,0, 0,2 % Ethyleneinbau, $T_m$ = 126,5°C, $\Delta H_m$ = 65 J/g.

**Beispiel 12**

Es wurde analog Beispiel 10 verfahren. 7,5 g Ethylen wurden vorgelegt. Während der Polymerisation wurden 25 g Ethylen zudosiert. Es wurde zwei Stunden bei 60°C polymerisiert. 53,3 mg (0,103 mmol) Metallocenverbindung wurden eingesetzt. 2,3 kg statistisches Ethylen-Propylen-Copolymeres wurden erhalten. Die Aktivität des Metallocens betrug somit 20,8 kg PP/g Metallocen /h oder 11,2 kg PP/mmol Hf/h.

VZ = 295 $cm^3/g$, $M_w$ = 349000 g/mol, $M_n$ = 79000 g/mol, $M_w/M_n$ = 4,4, $n_{C2}$ = 1,0, 1,3 % Ethyleneinbau, $T_m$ = 128°C, $\Delta H_m$ = 67 J/g.

**Beispiel 13**

Verfahren wurde analog Beispiel 10. 11 g Ethylen wurden vorgelegt. Während der Polymerisation wurden 36 g Ethylen zudosiert. Polymerisiert wurde zwei Stunden bei 60°C. 57,8 mg (0,108 mmol) Metallocenverbindung wurden eingesetzt. 1,7 kg statistisches Ethylen-Propylen-Copolymeres wurden erhalten. Die Aktivität des Metallocens betrug somit 14,7 kg PP/g Metallocen /h oder 7,8 kg PP/mmol Hf/h.

VZ = 277 $cm^3/g$, $M_w$ = 320000 g/mol, $M_n$ = 77600 g/mol, $M_w/M_n$ = 4,2, $n_{C2}$ = 1,0, 2,7 % Ethyleneinbau, $T_m$ = 127°C, $\Delta H_m$ = 63 J/g.

**Beispiel 14**

Verfahren wurde analog Beispiel 1. 37 g Ethylen wurden vorgelegt. Während der Polymerisation wurden 112 g Ethylen zudosiert. Polymerisiert wurde zwei Stunden bei 60°C. 53,6 mg (0,100 mmol) Metallocenverbindung wurden eingesetzt. 2,0 kg statistisches Ethylen-Propylen-Copolymeres wurden erhalten. Die Aktivität des Metallocens betrug somit 18,7 kg PP/g Metallocen /h oder 10,0 kg PP/mmol Hf/h.

VZ = 284 $cm^3/g$, $M_w$ = 334000 g/mol, $M_n$ = 67000 g/mol, $M_w/M_n$ = 5,0, $n_{C2}$ = 1,0, 7,4 % Ethyleneinbau, $T_m$ = 126,5°C, $\Delta H_m$ = 64,5 J/g.

## Patentansprüche

1. Verfahren zur Herstellung eines Propylen-Copolymers, bestehend aus 99,9 bis 80 Gew.-%, bezogen auf das Gesamtpolymer, Propyleneinheiten und 0,1 bis 20 Gew.-%, bezogen auf das Gesamtpolymer, aus Einheiten, die sich von Ethylen oder einem Olefin mit mindestens 4 C-Atomen der Formel $R^{15}$-CH=CH-$R^{16}$ ableiten, worin $R^{15}$ und $R^{16}$ gleich oder verschieden sind und ein Wasserstoffatom oder einen Alkylrest mit 1 bis 28 C-Atomen bedeuten oder $R^{15}$ und $R^{16}$ mit den sie verbindenden C-Atomen einen Ring mit 4 bis 28 C-Atomen bilden, durch Polymerisation von 50 bis 99,5 Gew.-%, bezogen auf die Gesamtmenge der Monomeren, Propylen und 0,5 bis 50 Gew.-%, bezogen auf die Gesamtmenge der Monomeren, mindestens eines Vertreters der Gruppe Ethylen und Olefine mit mindestens 4 C-Atomen der Formel $R^{15}$-CH=CH-$R^{16}$, worin $R^{15}$ und $R^{16}$ die oben genannte Bedeutung haben, bei einer Temperatur von 30°C bis

150°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Metallocen eine Verbindung der Formel I

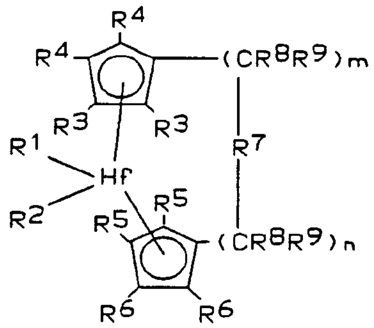

(I).

ist, worin

$R^1$ und $R^2$ gleich oder verschieden sind und ein Wasserstoffatom, eine $C_1$-$C_{10}$-Alkylguppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$,$R^4$, $R^5$ und $R^6$ gleich oder verschieden sind und ein Wasserstoffatom, ein Halogenatom, eine $C_1$-$C_{10}$-Alkylgruppe,

einen $-NR^{10}_2$-,$-SR^{10}$-, $-OSiR^{10}_3$-, $-SiR^{10}_3$- oder $-PR^{10}_2$- Rest bedeuten,

worin $R^{10}$ eine $C_1$-$C_{10}$-Alkylgruppe, eine $C_6$-$C_{10}$-Arylgruppe oder im Falle Si oder P enthaltender Reste auch ein Halogenatom ist,

oder je zwei benachbarte Reste $R^3$, $R^4$, $R^5$ oder $R^6$ mit den sie verbindenden C-Atomen einen Ring bilden,

$R^7$

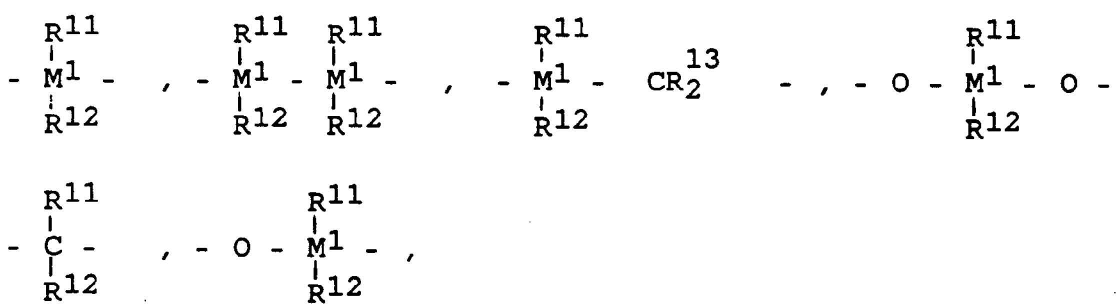

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{30}$-Alkylgruppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^1$ Silizium, Germanium oder Zinn ist,

$R^8$ und $R^9$ gleich oder verschieden sind und die für $R^{11}$ genannte Bedeutung haben,

m und n gleich oder verschieden sind und null, 1 oder 2 sind, wobei m plus n null, 1 oder 2 ist,

und einem Aluminoxan der Formel (II)

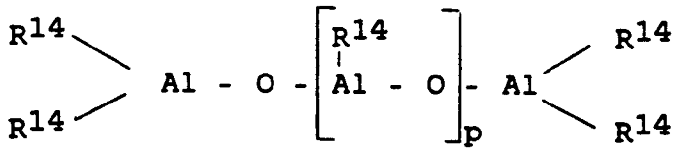 (II)

für den linearen Typ und/oder der Formel (III)

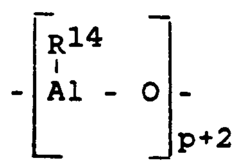 (III)

für den cyclischen Typ, wobei in den Formeln (II) und (III) $R^{14}$ eine $C_1$-$C_6$-Alkylgruppe bedeutet und p eine ganze Zahl von 2 bis 50 ist, bedeutet.

**2.** Verfahren nach Anspruch 1, dadurch gekennzeichnet, daß das Metallocen eine Verbindung der Formel I ist, worin der Rest $-(CR^8R^9)_m-R^7-(CR^8R^9)_n-$ $-CH_2-CH_2-$, $-Ge(CH_3)_2-$, $-Si(CH_3)_2-$, $-Si(C_6H_5)_2-$ oder $-Si(CH_3)(C_6H_5)-$ bedeutet.

**3.** Verfahren nach Anspruch 1, dadurch gekennzeichnet, daß das Metallocen Ethylen-bisindenyl-hafniumdichlorid oder Bisindenyl-dimethylsilyl-hafniumdichlorid ist.

**4.** Statistisches Propylen-Copolymer erhältlich im Verfahren nach Anspruch 1, bestehend aus 99,9 bis 80,0 mol-%, bezogen auf das Gesamtpolymer, Propyleneinheiten und
0,1 bis 20,0 mol-%, bezogen auf das Gesamtpolymer, aus Einheiten, die sich von Ethylen oder einem Olefin mit mindestens 4 C-Atomen der Formel $R^{15}$-CH=CH-$R^{16}$ ableiten, worin $R^{15}$ und $R^{16}$ gleich oder verschieden sind und ein Wasserstoffatom oder einen Alkylrest mit 1 bis 28 C-Atomen bedeuten oder $R^{15}$ und $R^{16}$ mit den sie verbindenden Atomen einen Ring mit 4 bis 28 C-Atomen bilden, einer $M_w$ von 100.000 bis 360.000 g/mol, einer Polydispersität von 2,5 bis 5,5 und einer Sequenzlänge kleiner 1,25.

**5.** Verwendung des Propylencopolymers nach Anspruch 4 für die Herstellung von Folien zum Tiefziehen und für das Blasformen von Hohlkörpern.

## Claims

**1.** A process for the preparation of a propylene copolymer composed of 99.9 to 80 % by weight, relative to the total polymer, of propylene units and 0.1 to 20 % by weight, relative to the total polymer, of units which are derived from ethylene or from an olefin with at least 4 carbon atoms of the formula $R^{15}$-CH=CH-$R^{16}$, where $R^{15}$ and $R^{16}$ are identical or different and denote a hydrogen atom or an alkyl radical having 1 to 28 carbon atoms or $R^{15}$ and $R^{16}$ with the carbon atoms bonding them form a ring having 4 to 28 carbon atoms, by polymerizing 50 to 99.5 % by weight, relative to the total amount of monomers, of propylene and 0.5 to 50 % by weight, relative to the total amount of monomers, of at least one representative of the group consisting of ethylene and olefins having at least 4 carbon atoms of the formula $R^{15}$-CH=CH-$R^{16}$, where $R^{15}$ and $R^{16}$ have the meaning given above, at a temperature of 30°C to 150°C at a pressure of 0.5 to 100 bar in solution, in suspension or in the gas phase in the presence of a catalyst composed of a metallocene and an aluminoxane, where the metallocene is a compound of the formula I

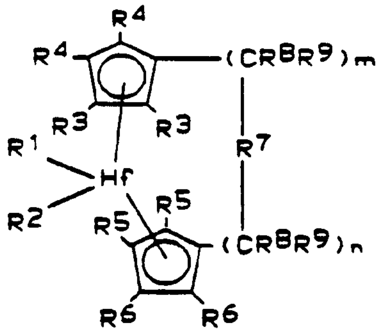

(I)

in which

$R^1$ and $R^2$ are identical or different and denote a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,

$R^3$, $R^4$, $R^5$ and $R^6$ are identical or different and denote a hydrogen atom, a halogen atom, a $C_1$-$C_{10}$-alkyl group, a radical $-NR^{10}_2-$, $-SR^{10}-$, $-OSiR^{10}_3-$,

or $-PR^{10}_2-$ in which $R^{10}$ is a $C_1$-$C_{10}$-alkyl group, a $C_6$-$C_{10}$-aryl group or if the radical contains Si or P is also a halogen atom,

or each pair of adjacent radicals $R^3$, $R^4$, $R^5$ or $R^6$ forms a ring with the carbon atoms linking them,

$R^7$ is

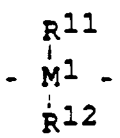 , 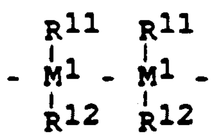 , 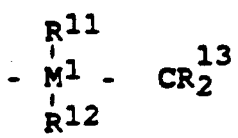 , 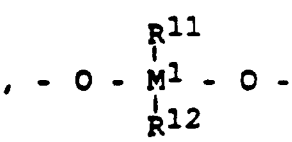

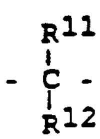 , 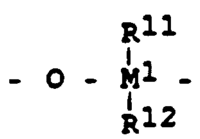 ,

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$

where

$R^{11}$, $R^{12}$ and $R^{13}$ are identical or different and denote a hydrogen atom, a halogen atom, a $C_1$-$C_{30}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group, a $C_7$-$C_{40}$-alkylaryl group or $R^{11}$ and $R^{12}$ or $R^{11}$ and $R^{13}$ in each case form a ring with the atoms bonding them,

$M^1$ is silicon, germanium or tin,

$R^8$ and $R^9$ are identical or different and have the meaning given for $R^{11}$,

m and n are identical or different and are zero, 1 or 2, m plus n being zero, 1 or 2,

and the aluminoxane is a compound of the formula (II)

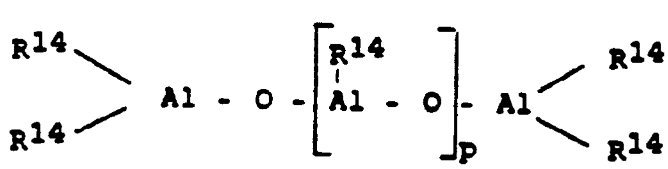

(II)

in the instance of the linear type and/or of the formula (III)

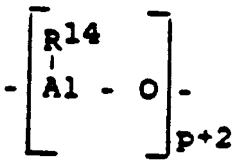 (III)

in the instance of the cyclic type, $R^{14}$ in the formulae (II) and (III) denoting a $C_1$-$C_6$-alkyl group and p denoting an integer from 2 to 50.

2. The process as claimed in claim 1, wherein the metallocene is a compound of the formula I in which the radical $-(CR^8R^9)_m-R^7-(CR^8R^9)_n-$ denotes $-CH_2-CH_2-$, $-Ge(CH_3)_2-$, $-Si(CH_3)_2-$, $-Si(C_6H_5)_2-$ or $-Si(CH_3)(C_6H_5)-$.

3. The process as claimed in claim 1, wherein the metallocene is ethylenebisindenylhafnium dichloride or bisindenyldimethylsilylhafnium dichloride.

4. A random propylene copolymer obtainable in the process as claimed in claim 1 and composed of 99.9 to 80.0 mol %, relative to the total polymer, of propylene units and 0.1 to 20.0 mol %, relative to the total polymer, of units which are derived from ethylene or from an olefin with at least 4 carbon atoms of the formula $R^{15}-CH=CH-R^{16}$ where $R^{15}$ and $R^{16}$ are identical or different and denote a hydrogen atom or an alkyl radical having 1 to 28 carbon atoms or $R^{15}$ and $R^{16}$ form a ring of 4 to 28 carbon atoms with the atoms bonding them, the said copolymer having an $M_w$ of 100,000 to 360,000 g/mol a polydispersity of 2.5 to 5.5 and a sequence length of below 1.25.

5. The use of the propylene copolymer as claimed in claim 4 for the preparation of sheets for thermoforming, and for the blowmolding of hollow articles.

## Revendications

1. Procédé pour préparer un copolymère de propylène constitué de 99,9 à 80% en poids, par rapport au polymère total, de motifs de propylène et de 0,1 à 20,0% en poids, par rapport au polymère total, de motifs dérivant de l'éthylène ou d'une oléfine à au moins quatre atomes de carbone qui répond à la formule $R^{15}-CH=CH-R^{16}$ dans laquelle $R^{15}$ et $R^{16}$ représentent chacun, indépendamment l'un de l'autre, un atome d'hydrogène ou un alkyle contenant de 1 à 28 atomes de carbone, ou $R^{15}$ et $R^{16}$ forment ensemble, et avec les atomes de carbone qui les unissent, un cycle contenant de 4 à 28 atomes de carbone, par polymérisation de 50 à 99,5% en poids, par rapport à la quantité totale des monomères, de propylène et de 0,5 à 50% en poids, par rapport à la quantité totale des monomères, d'au moins un composé pris dans l'ensemble constitué par l'éthylène et les oléfines à au moins quatre atomes de carbone qui répondent à la formule $R^{15}-CH=CH-R^{16}$ dans laquelle $R^{15}$ et $R^{16}$ ont les significations indiquées ci-dessus, à une température de 30 à 150°C, sous une pression de 0,5 à 100 bar, en solution, en suspension ou en phase gazeuse, en présence d'un catalyseur constitué d'un métallocène et d'un aluminoxane, procédé caractérisé en ce que le métallocène est un composé répondant à la Formule I :

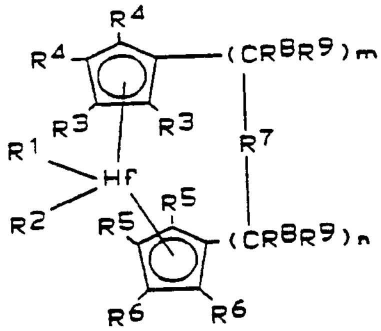 (I)

dans laquelle

$R^1$ et $R^2$ représentent chacun, indépendamment l'un de l'autre,

un atome d'hydrogène, un alkyle en $C_1$-$C_{10}$, un alcoxy en $C_1$-$C_{10}$, un aryle en $C_6$-$C_{10}$, un aryloxy en $C_6$-$C_{10}$, un alcényle en $C_2$-$C_{10}$, un arylalkyle en $C_7$-$C_{40}$, un alkylaryle en $C_7$-$C_{40}$, un arylalcényle en $C_8$-$C_{40}$ ou un atome d'halogène,

$R^3$, $R^4$, $R^5$ et $R^6$ représentent chacun, indépendamment l'un de l'autre, un atome d'hydrogène, un atome d'halogène, un alkyle en $C_1$-$C_{10}$, un radical répondant à l'une des formules $-NR^{10}_2-$, $SR^{10}-$, $OSiR^{10}_3-$ et $-PR^{10}_2-$ dans lesquelles $R^{10}$ représente un alkyle en $C_1$-$C_{10}$, un aryle en $C_6$-$C_{10}$ ou, dans le cas de radicaux contenant Si ou P, également un atome d'halogène), ou des radicaux $R^3$, $R^4$, $R^5$ et $R^6$ voisins forment deux à deux un cycle avec les atomes de carbone qui les unissent,

$R^7$ représente l'un des radicaux suivants :

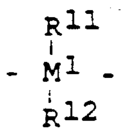 , 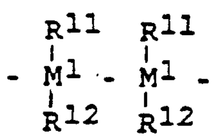 , 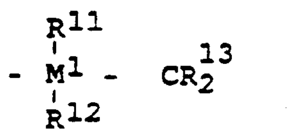 , 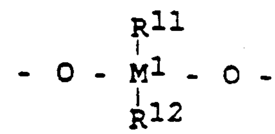

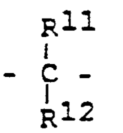 , 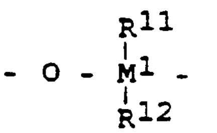 ,

$=BR^{11}$, $= AlR^{11}$, -Ge-, -Sn-, -O-, -S-, = SO, = $SO_2$, = $NR^{11}$, =CO, = $PR^{11}$ et =$P(O)R^{11}$,

$R^{11}$, $R^{12}$ et $R^{13}$ représentent chacun, indépendamment l'un de l'autre, un atome d'hydrogène, un atome d'halogène, un alkyle en $C_1$-$C_{30}$, un fluoralkyle en $C_1$-$C_{10}$, un aryle en $C_6$-$C_{10}$, un fluoraryle en $C_6$-$C_{10}$, un alcoxy en $C_1$-$C_{10}$, un alcényle en $C_2$-$C_{10}$, un arylalkyle en $C_7$-$C_{40}$, un arylalcényle en $C_8$-$C_{40}$ ou un alkylaryle en $C_7$-$C_{40}$, ou $R^{11}$ et $R^{12}$, ou $R^{11}$ et $R^{13}$, forment un cycle avec les atomes qui les unissent,

$M^1$ représente le silicium, le germanium ou l'étain,

$R^8$ et $R^9$ ont chacun, indépendamment l'un de l'autre, l'une des significations qui ont été données pour $R^{11}$,

et

m et n représentent chacun, indépendamment l'un de l'autre,

un nombre égal à zéro, à 1 ou à 2 avec la condition que la somme (m + n) soit égale à zéro, à 1 ou à 2,

et l'aluminoxane est un composé répondant, pour le type linéaire, à la Formule II :

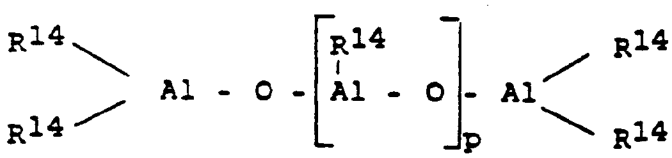 (II)

et/ou, pour le type cyclique, à la Formule III :

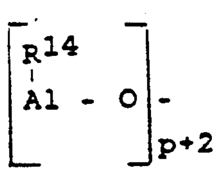 (III),

formules dans lesquelles $R^{14}$ représente un alkyle en $C_1$-$C_6$ et p un nombre entier de 2 à 50.

2. Procédé selon la revendication 1 caractérisé en ce que le métallocène est un composé de Formule I dans lequel le radical $-(CR^8R^9)_m-R^7-(CR^8R^9)_n-$ est un radical $-CH_2-CH_2-$, $-Ge(CH_3)_2-$, $-Si(CH_3)_2-$, $-Si(C_6H_5)_2-$ ou $-Si(CH_3)(C_6H_5)-$.

3. Procédé selon la revendication 1 caractérisé en ce que le métallocène est le dichlorure d'éthylène-bis-indényl-hafnium ou le dichlorure de bis-indényldiméthylsilyl-hafnium.

**4.** Copolymère statistique du propylène qui peut être obtenu par le procédé de la revendication 1, copolymère constitué de 99,9 à 80,0% en mol, par rapport au polymère total, de motifs de propylène et de 0,1 à 20,0% en mol, par rapport au polymère total, de motifs dérivant de l'éthylène ou d'une oléfine contenant au moins 4 atomes de carbone et répondant à la formule $R^{15}$-CH=CH-$R^{16}$ dans laquelle $R^{15}$ et $R^{16}$ représentent chacun, indépendamment l'un de l'autre, un atome d'hydrogène ou un radical alkyle contenant de 1 à 28 atomes de carbone, ou $R^{15}$ et $R^{16}$ forment ensemble, et avec les atomes qui les unissent, un cycle contenant de 4 à 28 atomes de carbone, copolymère qui a une valeur $M_p$ de 100 000 à 360000 g/mol, une polydispersité de 2,5 à 5,5 et une longueur de séquences inférieure à 1,25.

**5.** Application du copolymère du propylène selon la revendication 4 à la fabrication de feuilles destinées à être embouties et à la fabrication d'objets creux par soufflage.